# EUROPEAN PATENT SPECIFICATION

(11) **EP 2 950 908 B1**
(45) Date of publication and mention of the grant of the patent: **09.06.2021**
(21) Application number: 14704064.6
(22) Date of filing: 30.01.2014
(51) Int. Cl.: B01D 35/30, B01D 29/01, B01D 29/07, B01D 29/52, B01D 29/56

(54) **FILTER WITH DUAL PLEAT PACK**
FILTER MIT DOPPELFALTPACKUNG
FILTRE AYANT UN DOUBLE PAQUET DE PLIS

(30) Priority: 31.01.2013 US 201313755154
(43) Date of publication of application: 09.12.2015
(73) Proprietor: Filtran, LLC, Des Plaines, IL 60016 (US)
(72) Inventor: ELEFTHERAKIS, John, G., Cary, IL 60013 (US); KHALIL, Ibrahim, Lake Barrington, IL 60010 (US); ALFARO, Conrad, F., Bolingbrook, IL 60490 (US)
(74) Representative: Richly & Ritschel Patentanwälte PartG mbB
(86) International application number: PCT/US2014/013919
(87) International publication number: WO 2014/120962

(56) References cited:
- EP-A1- 1 733 775
- US-A- 6 156 089
- US-A1- 2006 169 632
- US-A1- 2008 245 721
- US-A1- 2013 008 845

## Description

### BACKGROUND

### 1. Technical Field

The invention relates generally to the field of filtration. More specifically, some embodiments of the invention relate to filters that are used to filter liquids such as engine oil or transmission oil in engines such as vehicle engines.

### 2. Background

Various filtration devices are known. More specifically, filtration devices are known that are used in engine and/or vehicle applications, for example in the filtration of automotive transmission fluid. Some devices provide a housing forming a chamber containing a filtration media such as, for example, a felt type media that is permeable to the fluid but traps particles or other contaminants Such a device is for example disclosed in document EP 1 733 775 A1.

Accordingly, it would be desirable to have a filter device and method that can provide desired levels of filtration, compactness, and/or manufacturability.

### SUMMARY OF THE INVENTION

In light of the present need for filters such as transmission filters, a brief summary of various exemplary embodiments is presented. Some simplifications and omissions may be made in the following summary, which is intended to highlight and introduce some aspects of the various exemplary embodiments, but not to limit the scope of the invention, which is determined by the claims. Detailed descriptions of preferred exemplary embodimentd adequate to allow those of ordinary skill in the art to make and use the inventive concepts will follow in later sections.

According to the invention, a fluid filter with the features of claim 1 and a method of making a fluid filter with the features of claim 7 are disclosed.

The foregoing objects and advantages of the invention are illustrative of those that can be achieved by the various exemplary embodiments and are not intended to be exhaustive or limiting of the possible advantages which can be realized. Thus, these and other objects and advantages of the various exemplary embodiments will be apparent from the description herein or can be learned from practicing the various exemplary embodiments.

### BRIEF DESCRIPTION OF THE DRAWINGS

In order to better understand various exemplary embodiments, reference is made to the accompanying drawings, wherein:
FIG. 1 is an exploded view of a filter according to a first example (not according to the invention).
FIG. 2 is a top view of the filter of FIG. 1.
FIG.3 is a side view of the filter of FIG. 1.
FIG. 4 is a bottom view of the filter of FIG. 1.
FIG. 5 is a side cross-sectional view of the filter of FIG. 1.
FIG. 6 is a detailed view of a portion of FIG. 5.
FIG. 7 is an exploded view of an embodiment of a filter according to the invention.
FIG. 8 is a top view of the filter of FIG. 7.
FIG. 9 is a side view of the filter of FIG. 7.
FIG. 10 is a bottom view of the filter of FIG. 7.
FIG. 11 is a side cross-sectional view of the filter of FIG. 7.
FIG. 12 is a top view of a pleat pack element.
FIG. 13 is a cross-sectional end view of the filter of FIG. 7.
FIG. 14 is a detailed view of a portion of FIG. 11.

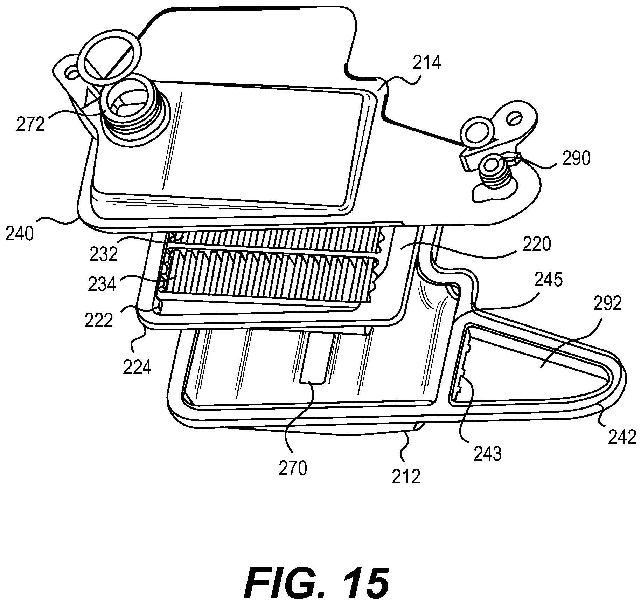

FIG. 15 is an exploded view of a third example (not according to the invention) of a filter.
FIG. 16 is a top view of the filter of FIG. 15.
FIG. 17 is a side view of the filter of FIG. 15.
FIG. 18 is a side cross-sectional view of the filter of FIG. 15.
FIG. 19 is a perspective view of a pleat pack element.
FIG. 20 is a perspective view of the filter of FIG. 15.
FIG. 21 is a bottom view of the filter of FIG. 15.
FIG. 22 is a detailed view of a portion of FIG. 18.
FIG. 23 is a detailed view of a portion of FIG. 18.
FIG. 24 is a detailed side cross-sectional view of a portion of FIG. 18.

### DETAILED DESCRIPTION

Some embodiments of the present invention relate to filters, such as automotive transmission fluid filters. Some examples and embodiments will now be described with reference to the drawing figures in which like numbers generally designate like parts throughout.

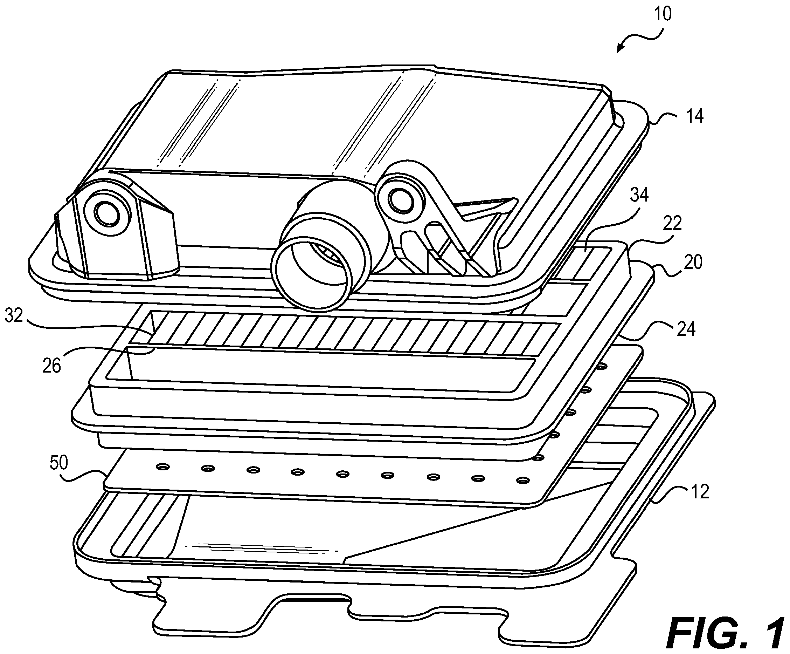

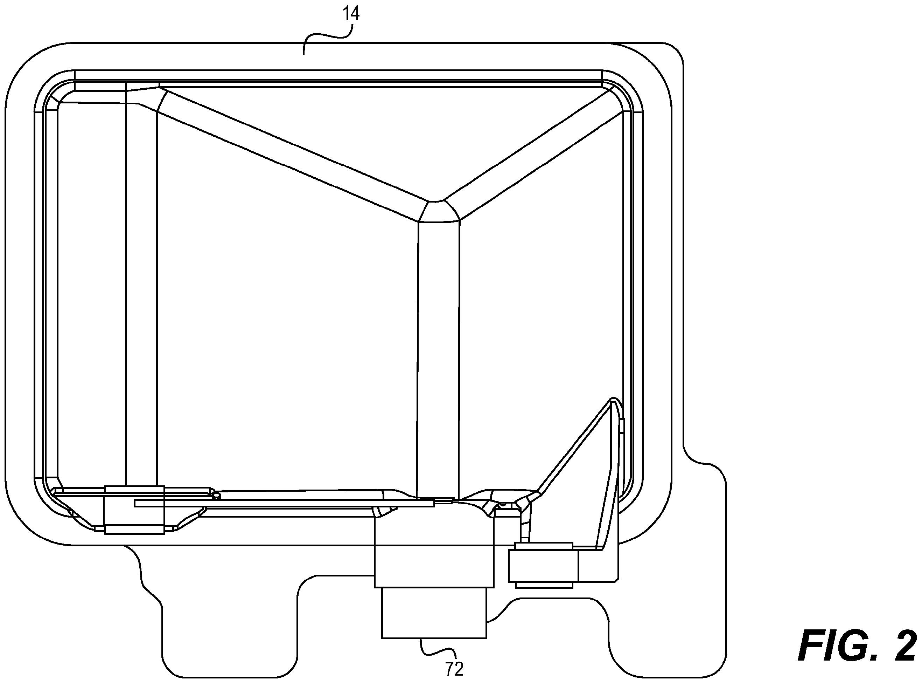

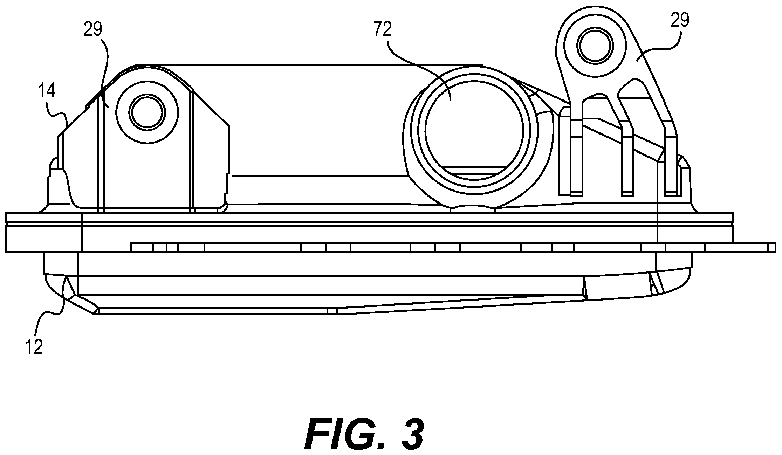

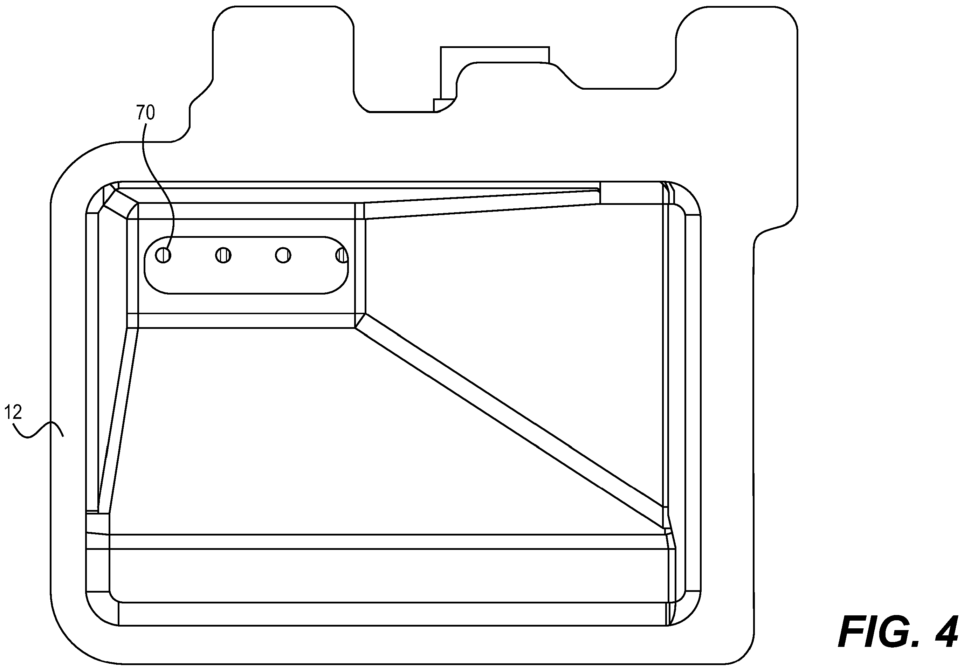

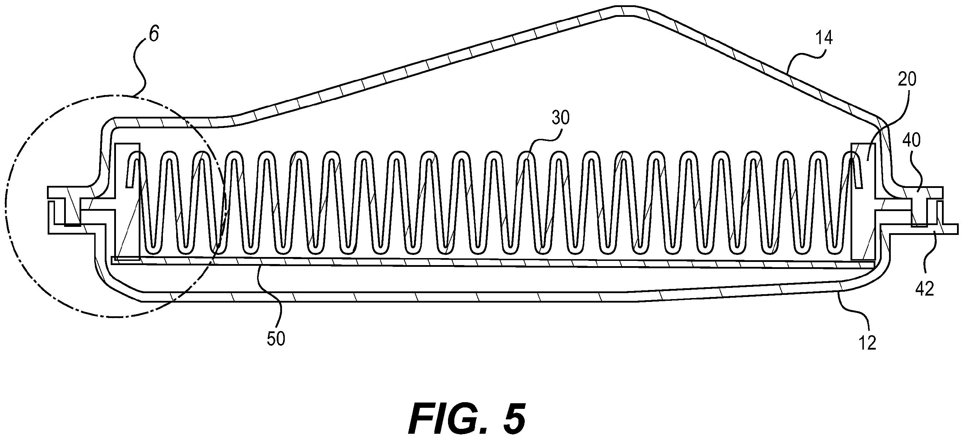

FIGS. 1-6 illustrate a first example. A filter 10 is provided which includes a lower housing shell 12 and an upper housing shell 14. The lower and upper housings 12 and 14 may each be made of for example a molded plastic material, or one or both could be made of stamped metal, for example.

Disposed in between the lower and upper housing shells 12 and 14 is a pleat pack element 20. The pleat pack element 20 comprises generally a peripheral frame 22 having an outward projecting flange 24, which may also be made of molded plastic. Internal strengthening or dividing ribs 26 may also be provided. The overall assembly comprising the pleat pack element 20 including the frame 22, flange 24, and stiffening ribs 26 is over-molded onto filtration media 30 which may comprise one or more media types, such as a first pleated media , or media section, 32, and a second pleated media, or media section, 34. Thus, the pleat pack 20 may contain only one type of media, two similar media, two dissimilar media or more types. In this manufacturing process, at least one or some of the media 30 is pleated or folded in a zigzag fashion and is retained in place within the mold while the heated plastic is injected into the mold. After cooling, a unitary pleat pack element 20 results. The media 30 is held in place by its interaction with the cooled rigid surrounding plastic structure, which forms the frame 22, the flange 24, and/or the ribs 26, for example as an integral unit with the media 30.

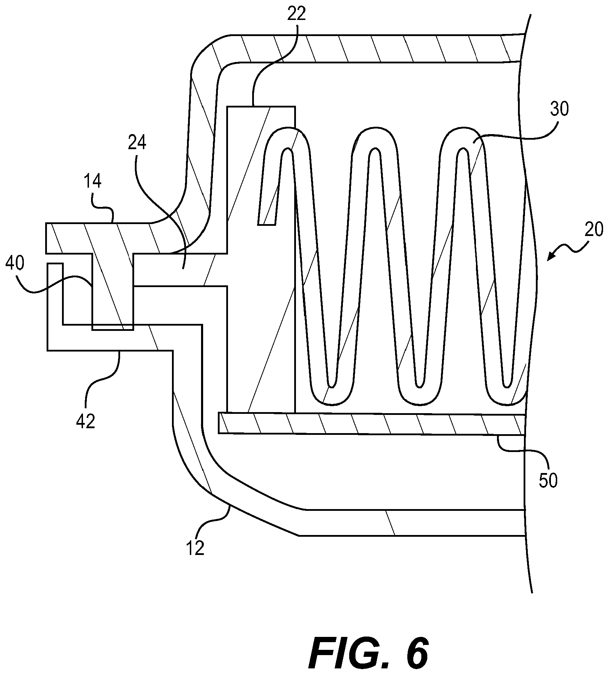

Particularly in the detailed view of FIG. 6, it can be seen that the media 30 is encapsulated at its ends and sides within the molded frame 22 during manufacturing, while leaving exposed regions of the media 30 for fluid to pass through.

The illustrated pleat pack assembly, or pleat pack element, 20 provides for convenient manufacture in that multiple separate components can each be individually molded and then assembled to form a finished filter 10. The lower housing 12 and the upper housing 14 are separate components from each other. The pleat pack 20 is also a separate component. In the example of FIGS. 1-6 the upper housing 14 may have a peripheral flange 40 that can abut against a peripheral flange 42 of the lower housing 12. The flanges 40 and 42 may be vibration welded or friction welded together by, e.g., a conventional welder. Laser welding or adhesive bonding may also be employed as an alternative. Upon the completion of vibration welding or other attachment of the flange 40 to the flange 42, the upper housing 14 becomes attached to the lower housing 12 to form an enclosure. The pleat pack 20 is trapped due to its shape such that its frame 22 and/or the outer flange 24 is physically retained within the enclosure. Supporting arms or bosses 29 may be provided, such as shown on upper housing 14.

The example of FIGS. 1-6 also shows an optional additional filter media 50. In this example, the additional filter media 50 is a flat sheet type media which may have holes spaced evenly through it. This sheet type media 50 may be a coarser media than any of the media 30 thus providing some degree of pre-filtration.

The illustrated example of FIGS. 1-6 shows two sections of media 32 and 34, although more sections may also be provided. From the illustrated example, the media 30 is arranged in two rows or sections 32 and 34, although the media 30 may be arranged in one contiguous section or in three rows, four rows or more. These sections of media 32 and 34 may be of the same density, or alternatively one media may be denser than the other. Therefore, it will be appreciated that various degrees of filtration density and efficiency may be provided within one pleat pack 20 if desired. Moreover, pre-filtration can be accomplished by the additional media 50, which in this example is a flat sheet.

A fluid inlet 70 is provided on the lower housing 12, and a fluid outlet 72 is provided on the upper housing 14.

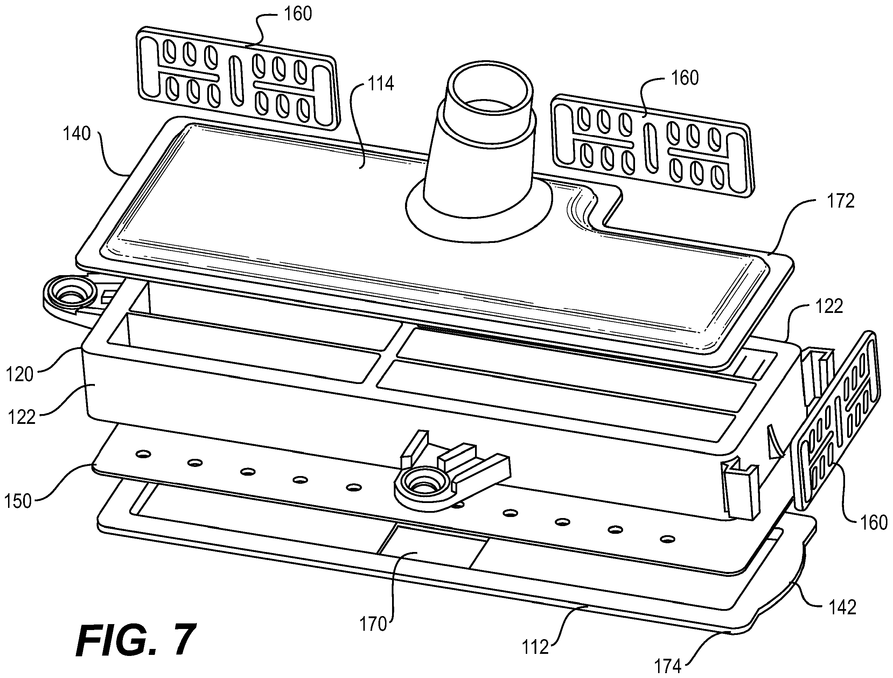

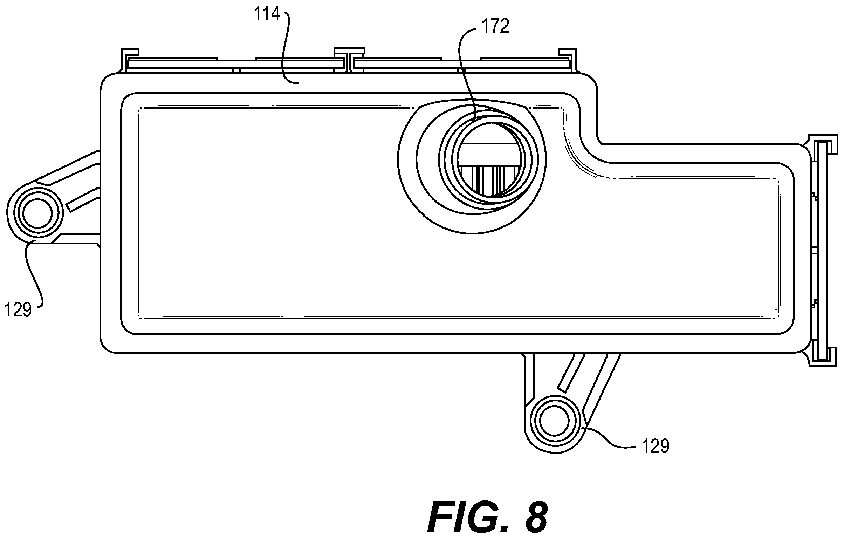

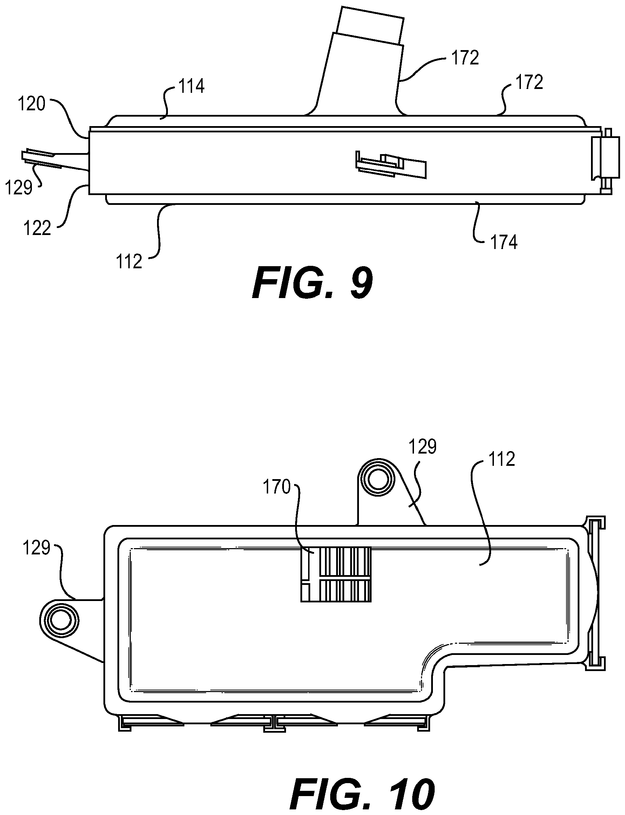

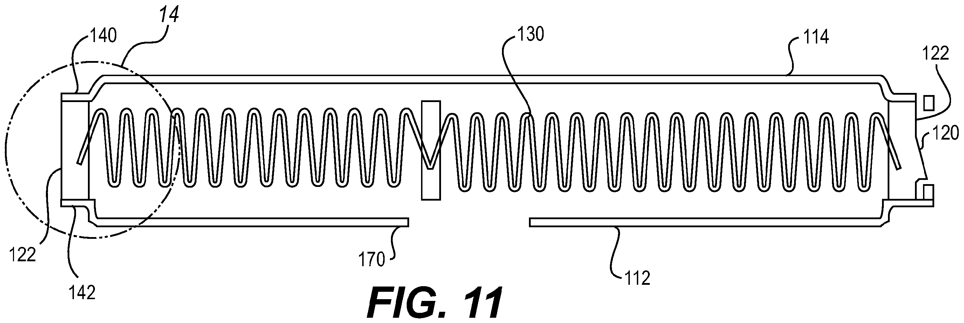

FIGS. 7-14 illustrate an embodiment according to the invention. The variations on materials, number of media types and other variations described with respect to the first example also apply to this embodiment and are not necessarily repeated in the text regarding this embodiment. A filter is provided which includes a lower housing 112 and an upper housing 114. The lower and upper housings 112 and 114 may each be made of for example a molded plastic material or metal.

Disposed in between the lower and upper housings 112 and 114 is a pleat pack element 120. The housing shells 112 and 114 form a sandwich with the pleat pack element 120 which is sandwiched, or interposed, between the shells 112 and 114. The pleat pack element 120 comprises generally a peripheral frame 122, which may also be made of molded plastic. Internal strengthening or dividing ribs 126 are also provided. The overall assembly including the frame 122 and stiffening ribs 126 is over-molded onto filtration media 130 which comprises a first pleated media, or media section, 132, and a second pleated media, or media section, 134. In this manufacturing process, the media is pleated or folded in a zigzag fashion and is retained in place within the mold while the plastic is injected into the mold. After cooling, a unitary plest pack element 120 results. The media 130 is held in place by its interaction with the surrounding plastic structure. Particularly in the detailed view of FIG. 6, it can be seen that the media 130 is encapsulated at its ends and sides within the molded frame 122 during manufacturing. The pleat pack element 120 also has an exposed area of media 130 for fluid to flow through.

The illustrated pleat pack assembly 120 provides for convenient manufacture in that three separate components can each be individually molded and then assembled to form a finished filter 110. This embodiment differs from the first and third examples in that, instead of being totally enclosed inside the chamber formed by the upper and lower housing 112 and 114, in this embodiment the frame 122 and/or flange 124 form sides of the overall housing. Thus, the lower housing 112 and upper housing 114 do not touch each other - instead the frame 122 and/or flange 124 are interposed between the peripheries of the lower and upper housings 112 and 114 and thus from the sides of the enclosure.

The lower housing 112 and the upper housing 114 are separate components from each other. The pleat pack 120 is also a separate component. The upper housing 114 will have a flange 140 that can abut one side of the frame 122, and the other side of the frame 122 abuts against a peripheral flange 142 of the lower housing 112. The flanges 140 and 142 may be vibration welded to the frame 122 or friction welded by a conventional welder. Laser welding or adhesive bonding may also be employed as an alternative. Upon the completion of vibration or other welding of the flange 140 and the flange 142 to the frame 122, the upper housing 114 and the lower housing 112 together with the frame 122 form an enclosure. The frame 122 of the pleat pack 120 is therefore part of the housing.

The embodiment of FIGS. 7-14 also shows (in FIG. 7) an optional additional filter media 150. In this example, the additional filter media 150 is a flat sheet type media which may have holes spaced evenly through it. This sheet type media 150 may be a coarser media than any of the media 130 thus providing some degree of pre-filtration.

The illustrated embodiment of FIGS. 7-14 shows two sections of media 132 and 134. From this illustrated embodiment, the media 130 is in two rows or sections, although it may be in four rows or more. One media is denser than the other. Therefore, it will be appreciated that various degrees of filtration density and efficiency may be provided within one pleat pack 120 if desired. Moreover, pre-filtration can be accomplished by the flat media 150.

It will be appreciated that a distinction in this embodiment is that the upper housing 114 is joined directly to the frame 122 of the pleat pack 120. Further, the lower housing 112 is joined directly to the frame 122 of the pleat pack 120. Thus, the frame 122 of the pleat pack 120 actually forms an outer side wall of the overall filter, and also participates in enclosing the overall filter. This can provide several advantages. Using the periphery of the frame 122 as a structural side housing component can make the overall filter 110 more compact, in that when viewed in plan or top view the filter takes up less area for the same size of pleat pack 120, compared to an embodiment that has top and bottom housings that surround the periphery of the pleat pack 120, because the area that would otherwise be needed for the mated flanges of the upper and lower housings is not longer needed to surround the outer periphery of the pleat pack 120. Also, it is impossible for fluid to move through the housing without passing through the pleat pack 120; that is, no fluid can escape (while inside the housing) around the edge of the pleat pack 120 bewteen the pleat pack flange 124 and the inside of the housings.

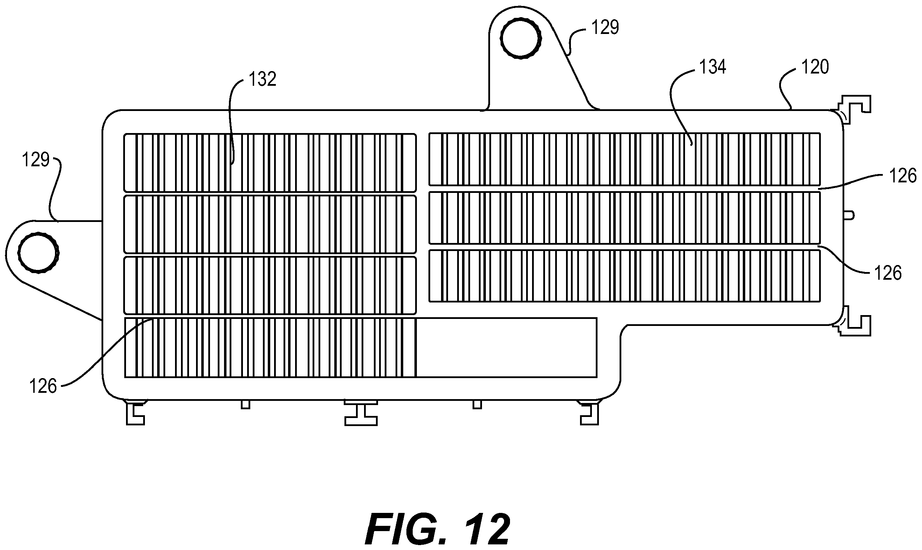

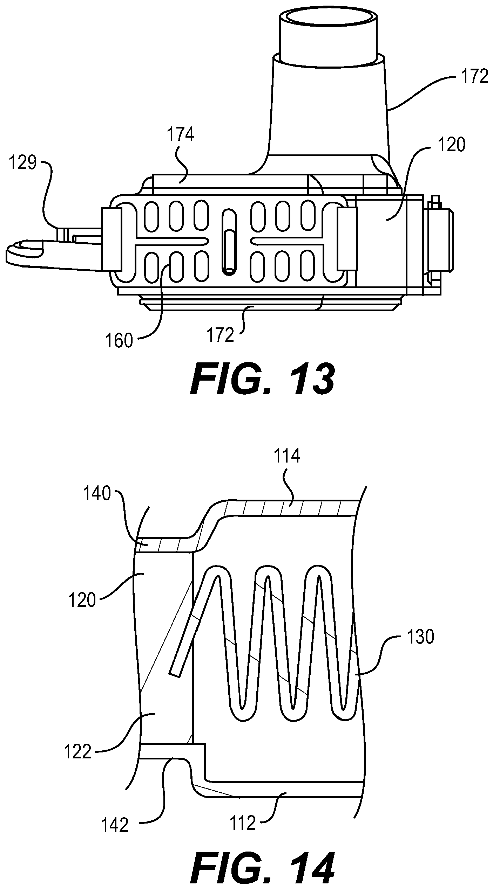

FIG. 12 illustrates the pleat pack 120 having stiffeners 126 thus dividing the media 130 into rows of media. Some rows have one type of media, while other rows have other types of media. For example, in this embodiment one example is that a region 132 of one type of media occupies a different landscape space than a region of media 134. Also, since the frame 122 of the pleat pack 120 is forming an external structural part of the filter's surrounding structure, as well being over-molded to support the media 130, the frame 122 of the pleat pack 120 can be integral with supporting arms or bosses 129. As seen particularly in FIGS. 7 and 13, external devices 160 may be mounted around the frame 122 of the pleat pack 120 and these external devices run 160 may include supports for magnets or other desired external structures. This provides a benefit that the wall thickness of the upper and lower housing 112 and 114 may be relatively thin in order to provide a desired compactness to the filter with the pleat pack 120 providing structural rigidity.

A fluid inlet 170 is provided on the lower housing 112, and a fluid outlet 172 is provided on the upper housing 114.

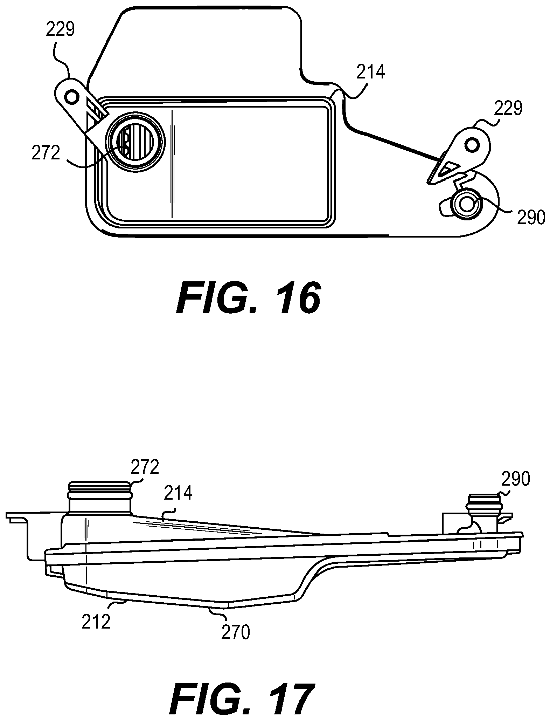

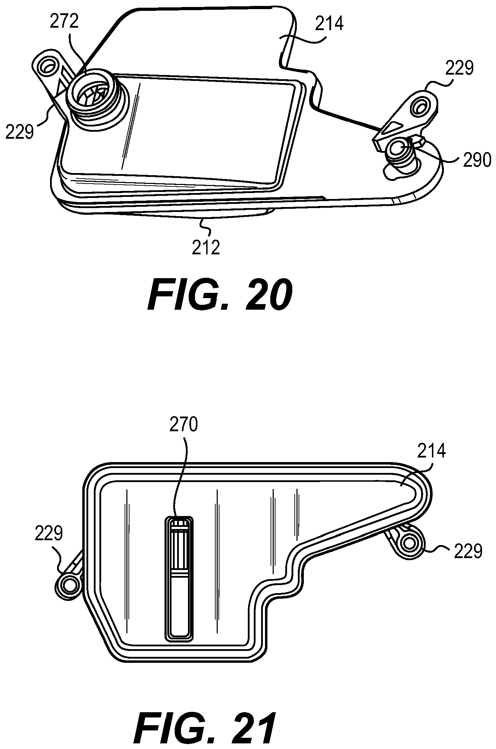

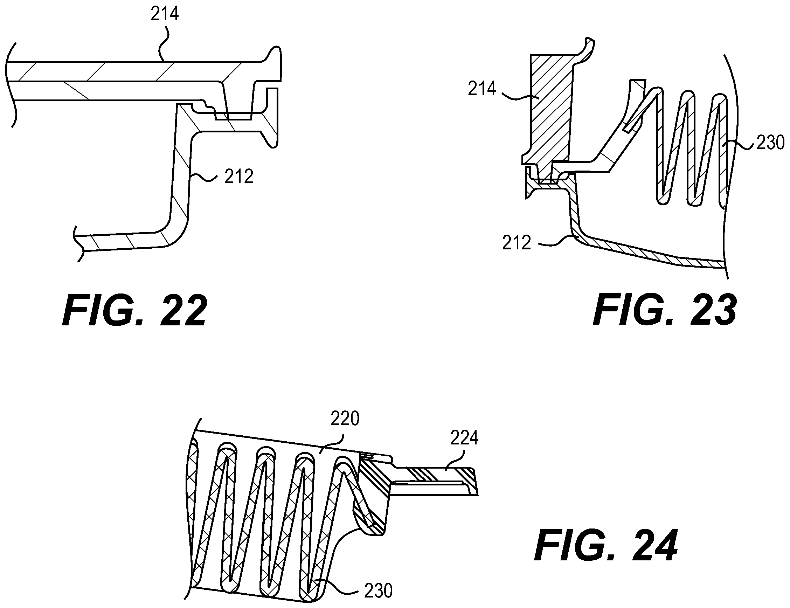

FIGS. 16-24 illustrate a third example. The variations on materials, number of media types and other variations described with respect to the first example also apply to this example and are not necessarily repeated in the text regarding this example. A filter is provided which includes a lower housing shell 212 and an upper housing shell 214. The upper and lower housing shells may each be made of for example a molded plastic material or metal.

Disposed in between the lower and upper housings 212 and 214 is a pleat pack element 220. The pleat pack element 220 comprises generally a peripheral frame 222 having an outward projecting flange 224, which may also be made of molded plastic. Internal strengthening or dividing ribs 226 may also be provided. The overall assembly including the frame 222, flange 224, and stiffening ribs 226 is over-molded onto filtration media 230 which may comprise one or more media types, such as a first pleated media 232 and a second pleated media 234. In this manufacturing process, at least some or all of the media 230 is pleated or folded in a zigzag fashion and is retained in place within the mold while the plastic is injected into the mold. After cooling, a unitary pleat pack element 220 results. The media 230 is held in place by its interaction with the surrounding plastic structure.

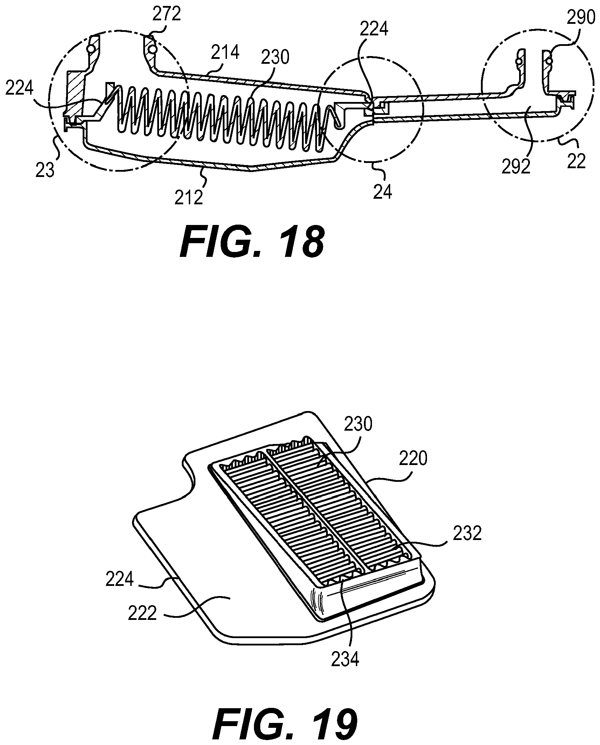

Particularly in the detailed view of FIG. 18, it can be seen that the media 230 is encapsulated at its ends and sides within the molded frame 222 during manufacturing. An exposed region of media 230 is provided for fluid to pass through.

The illustrated pleat pack element 220 provides for convenient manufacture in that three separate components can each be individually molded and then assembled to form a finished filter 210. The lower housing 212 and the upper housing 214 are separate components from each other. The pleat pack 220 is also a separate component. The upper housing 214 may have a peripheral flange 240 that can abut against a peripheral flange 242 of the lower housing 212. The flanges 240 and 242 may be vibration welded or friction welded together by a conventional welder. Laser welding or adhesive bonding may also be employed as examples of alternatives. Upon the completion of vibration or other bonding or welding of the flange 240 to the flange 242, the upper housing 214 is now attached to the lower housing 212 to form an enclosure. The pleat pack 220 is trapped due to its shape such that its outer flange 224 is physically retained within the enclosure. Supporting arms or bosses 229 may be provided.

The example of FIGS. 16-24 may also employ an optional additional filter media (not shown in this embodiment, but similar to media 50 and 150 described above). Also, this example shows a bypass outlet 290 from a bypass region 292, that receives fluid via internal housing openings 243 in a region 245 of the lower housing 212. In this example, the region 245 serves as the mating area with the flange 224 at that location, so the bypass fluid through the opening 243 passes around and outiside of the pleat pack 220 and is not filtered by the pleat pack 220.

From the illustrated example, the media 230 is in two rows or sections, although it may be in three or four rows or more. The illustrated example shows two sections of media 232 and 234. These sections of media 232 and 234 may be of the same density or one media may be denser than the other. Therefore, it will be appreciated that various degrees of filtration density and efficiency may be provided within one pleat pack 220 if desired.

A fluid inlet 270 is on the lower housing 212 and a fluid outlet 272 is on the upper housing 214.

In all examples and embodiments, where there is a description of joining plastic components to each other, such as for example the housing shells to each other, or the housing shells to the pleat pack frame, it is to be understood than any method of plastic joining may be used at any location, such as vibration welding, laser welding, or even bonding or gluing. Moreover if one or more components are made of metal or have metal at the joining locations, other methods of joining such as crimping may be utilized. Further different media types are referred to as having different densities. This may describe any of many various characteristics such as particle size capture, efficiency, or even material type of characteristics such as porosity or holes through the media. The references herein to housings 12, 14, 112, 114, 212 and 214 may also be considered to refer to housing shells, or housing components. Also it should be noted that where components are described as welded or bonded, those are examples, and other attachment mechanisms such as screws, clips, interlocking teeth, ridges, snap fits, etc. may be used.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the scope of the claims. Accordingly, the foregoing disclosure, description, and figures are for illustrative purposes only and do not in any way limit the invention, which is defined only by the claims.

## Claims

1. A fluid filter (10), comprising:
an upper housing shell (114) comprising a fluid outlet (172);
a lower housing shell (112) comprising a fluid inlet (170);
a pleat pack element (120) comprising a peripheral frame (122), a first filtration medium (132), and a second filtration medium (134), the first filtration medium (132) and second filtration medium (134) being held in place by the peripheral frame (122);
wherein:
the first filtration medium (132) is a pleated filter medium having a first filtration density;
the second filtration medium (134) is a pleated filter medium having a second filtration density that differs from the first filtration density;
the peripheral frame (122) is at least partially molded over the first and second filtration medium (132, 134);
the pleat pack element (120) further comprises stiffeners (126) that are overmolded on the first filtration medium (132) and second filtration medium (134) and which divide the first filtration medium (132) into a plurality of first media rows and the second filtration medium (134) into a plurality of second media rows; and
the number of first media rows is different than the number of second media rows.

2. The fluid filter of claim 1, further comprising an additional filtration medium (150) between the fluid inlet (170) and the pleat pack (120), wherein the additional filtration medium (150) is a flat sheet type media.

3. The fluid filter according to claim 1, wherein the additional filtration medium (150) has a filtration density that is different from the first filtration density and the second filtration density.

4. The fluid filter according to claim 2, wherein the additional filtration medium (150) comprises a plurality of holes spaced evenly through it.

5. The fluid filter according to claim 4, wherein the additional filtration medium (150) is adjacent the pleat pack element (120).

6. The fluid filter according to claim 1, wherein the upper housing shell (114) and lower housing shell (112) are each joined to the peripheral frame (122) by a laser weld, a vibration weld, a friction weld, or an adhesive.

7. A method of making a fluid filter, comprising:
providing an upper housing shell (114) comprising a fluid outlet (172);
providing a lower housing shell (112) comprising a fluid inlet (170);
providing a pleat pack element (120) comprising a peripheral frame (122), a first filtration mediurr (132) and a second filtration medium (134), wherein the first filtration medium (132) and second filtration medium (134) are held in place within the peripheral frame (122); wherein:
the first filtration medium (132) is a pleated filter medium having a first filtration density;
the second filtration medium (134) is a pleated filter medium having a second filtration density that differs from the first filtration density;
the peripheral frame (122) is at least partially molded over the first and second filtration medium (132, 134);
the pleat pack element (120) further comprises stiffeners (126) that are overmolded on the first filtration medium (132) and the second filtration medium (134),
and which divide the first filtration medium (132) into a plurality of first media rows and the second filtration medium (134) into a plurality of second media rows; and
the number of first media rows is different than the number of second media rows; and
forming a housing with the upper and lower housing shells (114, 112), with the pleat pack element (120) enclosed within the housing.

8. The method according to claim 7, further comprising providing an additional filtration medium (150), wherein the additional filtration medium (150) is a flat sheet type media and during said
forming said housing, the additional filtration medium (150) is between the pleat pack element (120) and the fluid inlet (170).

9. The method according to claim 8, wherein the additional filtration medium (150) is adjacent the pleat pack element (120) during forming said housing.

10. The method according to claim 7, wherein forming said housing comprises joining the upper housing shell (114) and the lower housing shell (112) to the peripheral frame (122) of the pleat pack assembly (120) with a laser weld, a vibration weld, a friction weld, or an adhesive.

11. The method according to claim 8, wherein the additional filtration medium (150) has a third filtration density that differs from said first and second filtration densities.

12. The method according to claim 8, wherein the additional filtration medium (150) comprises a plurality of holes spaced evenly through it.

## Patentansprüche

1. Fluidfilter (10), das Folgendes umfasst:
eine obere Gehäusehülle (114), die einen Fluidauslass (172) umfasst;
eine untere Gehäusehülle (112), die einen Fluideinlass (170) umfasst;
ein Faltenpackelement (120), das einen Umfangsrahmen (122), ein erstes Filtrationsmedium (132) und ein zweites Filtrationsmedium (134) umfasst, wobei das erste Filtrationsmedium (132) und das zweite Filtrationsmedium (134) durch den Umfangsrahmen (122) in Position gehalten werden;
wobei:
das erste Filtrationsmedium (132) ein gefaltetes Filtermedium ist, das eine erste Filtrationsdichte aufweist;
das zweite Filtrationsmedium (134) ein gefaltetes Filtermedium ist, das eine zweite Filtrationsdichte aufweist, die sich von der ersten Filtrationsdichte unterscheidet;
der Umfangsrahmen (122) wenigstens teilweise über dem ersten und dem zweiten Filtrationsmedium (132, 134) geformt ist;
das Faltenpackelement (120) ferner Versteifungen (126) umfasst, die auf dem ersten Filtrationsmedium (132) und dem zweiten Filtrationsmedium (134) überformt sind und die das erste Filtrationsmedium (132) in mehrere erste Medienreihen und das zweite Filtrationsmedium (134) in mehrere zweite Medienreihen teilen; und
die Anzahl von ersten Medienreihen sich von der Anzahl von zweiten Medienreihen unterscheidet.

2. Fluidfilter nach Anspruch 1, das ferner ein zusätzliches Filtrationsmedium (150) zwischen dem Fluideinlass (170) und dem Faltenpack (120) umfasst, wobei das zusätzliche Filtrationsmedium (150) ein Medium der Flachfolienart ist.

3. Fluidfilter nach Anspruch 1, wobei das zusätzliche Filtrationsmedium (150) eine Filtrationsdichte aufweist, die sich von der ersten Filtrationsdichte und der zweiten Filtrationsdichte unterscheidet.

4. Fluidfilter nach Anspruch 2, wobei das zusätzliche Filtrationsmedium (150) mehrere Löcher umfasst, die gleichmäßig durch dieses beabstandet sind.

5. Fluidfilter nach Anspruch 4, wobei das zusätzliche Filtrationsmedium (150) angrenzend an das Faltenpackelement (120) liegt.

6. Fluidfilter nach Anspruch 1, wobei die obere Gehäusehülle (114) und die untere Gehäusehülle (112) je durch eine Laserschweißung, eine Vibrationsschweißung, eine Reibschweißung oder einen Klebstoff mit dem Umfangsrahmen (122) verbunden sind.

7. Verfahren zum Herstellen eines Fluidfilters, das Folgendes umfasst:
Bereitstellen einer oberen Gehäusehülle (114), die einen Fluidauslass (172) umfasst;
Bereitstellen einer unteren Gehäusehülle (112), die einen Fluideinlass (170) umfasst;
Bereitstellen eines Faltenpackelements (120), das einen Umfangsrahmen (122), ein erstes Filtrationsmedium (132) und ein zweites Filtrationsmedium (134) umfasst, wobei das erste Filtrationsmedium (132) und das zweite Filtrationsmedium (134) innerhalb des Umfangsrahmens (122) in Position gehalten werden;
wobei:
das erste Filtrationsmedium (132) ein gefaltetes Filtermedium ist, das eine erste Filtrationsdichte aufweist;
das zweite Filtrationsmedium (134) ein gefaltetes Filtermedium ist, das eine zweite Filtrationsdichte aufweist, die sich von der ersten Filtrationsdichte unterscheidet;
der Umfangsrahmen (122) wenigstens teilweise über dem ersten und dem zweiten Filtrationsmedium (132, 134) geformt ist;
das Faltenpackelement (120) ferner Versteifungen (126) umfasst, die auf dem ersten Filtrationsmedium (132) und dem zweiten Filtrationsmedium (134) überformt sind und die das erste Filtrationsmedium (132) in mehrere erste Medienreihen und das zweite Filtrationsmedium (134) in mehrere zweite Medienreihen teilen; und
die Anzahl von ersten Medienreihen sich von der Anzahl von zweiten Medienreihen unterscheidet; und
Ausbilden eines Gehäuses mit der oberen und der unteren Gehäusehülle (114, 112), wobei die Faltenpackelemente (120) innerhalb des Gehäuses eingeschlossen sind.

8. Verfahren nach Anspruch 7, das ferner das Bereitstellen eines zusätzlichen Filtrationsmediums (150) umfasst, wobei das zusätzliche Filtrationsmedium (150) ein Medium der Flachfolienart ist und während des Ausbildens des Gehäuses das zusätzliche Filtrationsmedium (150) zwischen dem Faltenpackelement (120) und dem Fluideinlass (170) liegt.

9. Verfahren nach Anspruch 8, wobei das zusätzliche Filtrationsmedium (150) während des Ausbildens des Gehäuses angrenzend an das Faltenpackelement (120) liegt.

10. Verfahren nach Anspruch 7, wobei das Ausbilden des Gehäuses das Verbinden der oberen Gehäusehülle (114) und der unteren Gehäusehülle (112) mit dem Umfangsrahmen (122) der Faltenpackanordnung (120) mit einer Laserschweißung, einer Vibrationsschweißung, einer Reibschweißung oder einem Klebstoff umfasst.

11. Verfahren nach Anspruch 8, wobei das zusätzliche Filtrationsmedium (150) eine dritte Filtrationsdichte aufweist, die sich von der ersten und der zweiten Filtrationsdichte unterscheidet.

12. Verfahren nach Anspruch 8, wobei das zusätzliche Filtrationsmedium (150) mehrere Löcher umfasst, die gleichmäßig durch dieses beabstandet sind.

## Revendications

1. Filtre de fluide (10), comprenant :
une coque de boîtier supérieure (114) comprenant une sortie de fluide (172) ;
une coque de boîtier inférieure (112) comprenant une entrée de fluide (170) ;
un élément de paquet de plis (120) comprenant un cadre périphérique (122), un premier milieu de filtration (132) et un second milieu de filtration (134), les premier milieu de filtration (132) et second milieu de filtration (134) étant maintenus en place par le cadre périphérique (122) ;
dans lequel :
le premier milieu de filtration (132)
est un milieu filtrant plissé ayant une première densité de filtration ;
le second milieu de filtration (134)
est un milieu filtrant plissé ayant une deuxième densité de filtration qui diffère de la première densité de filtration ;
le cadre périphérique (122)
est au moins partiellement moulé sur les premier et second milieux de filtration (132, 134) ;
l'élément de paquet de plis (120) comprend en outre des raidisseurs (126) qui sont surmoulés sur les premier milieu de filtration (132) et second milieu de filtration (134) et qui divisent le premier milieu de filtration (132) en une pluralité de premières rangées de milieux et le second milieu de filtration (134) en une pluralité de secondes rangées de milieux ; et
le nombre de premières rangées de milieux est différent du nombre de secondes rangées de milieux.

2. Filtre de fluide selon la revendication 1, comprenant en outre un milieu de filtration supplémentaire (150) entre l'entrée de fluide (170) et le paquet de plis (120), dans lequel le milieu de filtration supplémentaire (150) est un milieu de type feuille plate.

3. Filtre de fluide selon la revendication 1, dans lequel le milieu filtrant supplémentaire (150) a une densité de filtration qui est différente de la première densité de filtration et de la deuxième densité de filtration.

4. Filtre de fluide selon la revendication 2, dans lequel le milieu de filtration supplémentaire (150) comprend une pluralité d'orifices espacés uniformément à travers celui-ci.

5. Filtre fluide selon la revendication 4, dans lequel le milieu de filtration supplémentaire (150) est adjacent à l'élément de paquet de plis (120).

6. Filtre de fluide selon la revendication 1, dans lequel la coque de boîtier supérieure (114) et la coque de boîtier inférieure (112) sont chacune reliées au cadre périphérique (122) par une soudure par laser, une soudure par vibration, une soudure par friction ou un adhésif.

7. Procédé de fabrication d'un filtre de fluide, comprenant :
la fourniture d'une coque de boîtier supérieure (114) comprenant une sortie de fluide (172) ;
la fourniture d'une coque de boîtier inférieure (112) comprenant une entrée de fluide (170) ;
la fourniture d'un élément de paquet de plis (120) comprenant un cadre périphérique (122), un premier milieu de filtration (132) et un second milieu de filtration (134), dans lequel les premier milieu de filtration (132) et second milieu de filtration (134) sont maintenus en place à l'intérieur du cadre périphérique (122) ;
dans lequel :
le premier milieu de filtration (132)
est un milieu filtrant plissé ayant une première densité de filtration ;
le second milieu de filtration (134)
est un milieu filtrant plissé ayant une deuxième densité de filtration qui diffère de la première densité de filtration ;
le cadre périphérique (122)
est au moins partiellement moulé sur les premier et second milieux de filtration (132, 134) ;
l'élément de paquet de plis (120) comprend en outre des raidisseurs (126) qui sont surmoulés sur le premier milieu de filtration (132) et le second milieu de filtration (134), et qui divisent le premier milieu de filtration (132) en une pluralité de premières rangées de milieux et le second milieu de filtration (134) en une pluralité de secondes rangées de milieux ; et
le nombre de premières rangées de milieux est différent du nombre de secondes rangées de milieux ; et
la formation d'un boîtier avec les coques de boîtier supérieure et inférieure (114, 112), l'élément de paquet de plis (120) étant enfermé à l'intérieur du boîtier.

8. Procédé selon la revendication 7, comprenant en outre la fourniture d'un milieu de filtration supplémentaire (150), dans lequel le milieu de filtration supplémentaire (150) est un milieu de type feuille plate et pendant ladite formation dudit boîtier, le milieu de filtration supplémentaire (150) est compris entre l'élément de paquet de plis (120) et l'entrée de fluide (170).

9. Procédé selon la revendication 8, dans lequel le milieu de filtration supplémentaire (150) est adjacent à l'élément de paquet de plis (120) pendant la formation dudit boîtier.

10. Procédé selon la revendication 7, dans lequel la formation dudit boîtier comprend la jointure de la coque de boîtier supérieure (114) et de la coque de boîtier inférieure (112) au cadre périphérique (122) de l'ensemble de paquet de plis (120) par une soudure par laser, une soudure par vibration, une soudure par friction ou un adhésif.

11. Procédé selon la revendication 8, dans lequel le milieu de filtration supplémentaire (150) a une troisième densité de filtration qui diffère desdites première et deuxième densités de filtration.

12. Procédé selon la revendication 8, dans lequel le milieu de filtration supplémentaire (150) comprend une pluralité d'orifices espacés uniformément à travers celui-ci.
